# EUROPEAN PATENT APPLICATION

(11) **EP 1 477 528 A1**
(43) Date of publication of application: **17.11.2004**
(21) Application number: 04252728.3
(22) Date of filing: 11.05.2004
(51) Int. Cl.: C08L 71/00, C08K 3/36

(54) **Curable fluoropolyether rubber compositions and rubber articles**

(30) Priority: 12.05.2003 JP 2003132484
(71) Applicant: SHIN-ETSU CHEMICAL CO., LTD., Chiyoda-ku, Tokyo (JP)
(72) Inventor: Sato, Shinichi, Shin-Etsu Chemical Co., Ltd., Usui-gun, Gunma-ken (JP); Yamaguchi, Hiromasa Shin-Etsu Chemical Co., Ltd., Usui-gun, Gunma-ken (JP)
(74) Representative: Stoner, Gerard Patrick

(57) **Abstract**

A curable fluoropolyether rubber composition comprising (A) a linear fluoropolyether compound having at least two alkenyl groups in a molecule and a perfluoropolyether structure in the backbone, (B) an organosilicon compound having at least two SiH groups, (C) spherical silica having an average particle size of 0.05-2.0 µm, and (D) a hydrosilylation catalyst cures into a rubber product having solvent resistance, chemical resistance, mold release, water repellency, oil repellency and improved heat conduction.

## Description

This invention relates to curable fluoropolyether rubber compositions which cure into rubber products having good solvent resistance, chemical resistance, weather resistance, parting property, water repellency and oil repellency as well as improved heat conduction, and rubber articles obtained therefrom.

### BACKGROUND

Japanese Patent No. 2,990,646 (JP-A 8-199070) discloses a composition comprising a linear fluoropolyether compound having at least two vinyl groups in a molecule and a perfluoropolyether structure in the backbone, a fluorinated organohydrogensiloxane having at least one fluorinated group and at least two hydrosilyl groups in a molecule, and a catalytic amount of a platinum group metal compound (as hydrosilylation catalyst). The composition cures into parts having a good profile of heat resistance, chemical resistance, solvent resistance, low-temperature properties, moisture permeability and the like.

Such fluoropolyether rubber compositions have satisfactory properties in most applications. They, however, are less satisfactory in the application where heat conduction is required. It would be desirable to have a curable fluoropolyether rubber composition having improved heat conduction.

An object of the invention is to provide curable fluoropolyether rubber compositions which when cured, exhibit good heat resistance, chemical resistance, solvent resistance, low-temperature property and moisture permeability as well as improved heat conduction. Another object is to provide rubber articles made therefrom.

It has been found that by compounding a linear fluoropolyether compound having at least two alkenyl groups in a molecule and a perfluoropolyether structure in the backbone with an organosilicon compound having at least two silicon atom-bonded hydrogen atoms in a molecule, spherical silica having an average particle size of 0.05 to 2.0 µm, and a hydrosilylation catalyst, there is obtained a curable fluoropolyether rubber composition which cures into a product having good properties including heat resistance, chemical resistance, solvent resistance, low-temperature property and moisture permeability and being improved in heat conduction.

In one aspect, the present invention provides a curable fluoropolyether rubber composition comprising
(A) a linear fluoropolyether compound having at least two alkenyl groups in a molecule and a perfluoropolyether structure in the backbone,
(B) an organosilicon compound having at least two silicon atom-bonded hydrogen atoms in a molecule,
(C) spherical silica having an average particle size of 0.05 to 2.0 µm, and
(D) a hydrosilylation catalyst.

In a second aspect, the present invention provides a rubber article comprising the curable fluoropolyether rubber composition in the cured state. The rubber articles contemplated herein include those suitable for use in automobiles, chemical plants, ink jet printers, semiconductor manufacturing lines, analytical or scientific instruments, medical equipment, aircraft or fuel cells and more specifically, rubber parts such as diaphragms, valves, O-rings, oil seals, gaskets, packings, joints and face seals.

### FURTHER EXPLANATIONS; OPTIONS AND PREFERENCES

Component (A) of the curable fluoropolyether rubber composition according to the invention is a linear fluoropolyether compound having at least two alkenyl groups in a molecule and a perfluoropolyether structure, preferably divalent perfluoroalkyl ether structure, in the backbone.

The perfluoroalkyl ether structures include structures comprising a plurality of recurring units -C_{d}F_{2d}O- wherein d is at each occurrence an integer of 1 to 6, for example, structures represented by the general formula (3):

(C_{d}F_{2d}O)_{q} (3)

wherein q is an integer of 1 to 500, preferably 2 to 400, more preferably 10 to 200.

Examples of the recurring units -C_{d}F_{2d}O- are:

- CF₂O-, -CF₂CF₂O-, -CF₂CF₂CF₂O-,

- CF(CF₃)CF₂O-, -CF₂CF₂CF₂CF₂O-,

- CF₂CF₂CF₂CF₂CF₂CF₂O-, and -C(CF₃)₂O-.

Of these, -CF₂O-, -CF₂CF₂O-, -CF₂CF₂CF₂O-, and -CF(CF₃)CF₂O- are preferred. It is understood that the perfluoroalkyl ether structure may consist of recurring units -C_{d}F_{2d}O- of one type or recurring units of two or more types.

The alkenyl groups in the linear fluoropolyether compound (A) are preferably those groups having 2 to 8 carbon atoms, especially 2 to 6 carbon atoms, and terminated with a CH₂=CH- structure, for example, vinyl, allyl, propenyl, isopropenyl, butenyl, and hexenyl. Of these, vinyl and allyl are preferred. The alkenyl groups may be present as side chains on the molecular backbone, but are preferably attached to the backbone at both ends either directly or through divalent linkages such as -CH₂-, -CH₂O-, -CH₂OCH₂-, -Y-NR-CO- or -CO-NR-Y'-. Herein Y is -CH₂- or a group of the structural formula (2), Y' is -CH₂- or a group of the structural formula (2'), and R is hydrogen, methyl, phenyl or allyl. 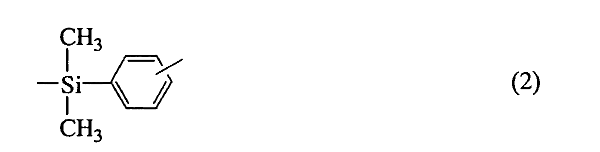 (inclusive of o-, m- and p-positions) 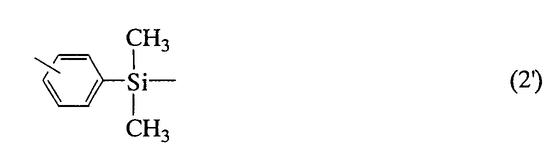 (inclusive of o-, m- and p-positions)

Of the fluoropolyether compounds mentioned above, linear compounds of the general formulae (4) and (5) are preferred.

CH₂ = CH-(X)ₚ-Rf⁰-(X')ₚ-CH = CH₂ (4)

CH₂ = CH-(X)ₚ-Q-Rf⁰-Q-(X')ₚ-CH = CH₂ (5)

In formulae (4) and (5), X is -CH₂-, -CH₂O-, -CH₂OCH₂- or - Y-NR-CO- wherein Y is -CH₂- or a group of the structural formula (2) and R is hydrogen, methyl, phenyl or allyl. X' is -CH₂-, -OCH₂-, -CH₂OCH₂- or -CO-NR'-Y'- wherein Y' is -CH₂- or a group of the structural formula (2') and R' is hydrogen, methyl, phenyl or allyl. Rf⁰ is a divalent perfluoropolyether structure, and preferably one of above formula (3); that is, of the formula (C_{d}F_{2d}O)_{q}. The letter p is independently 0 or 1. Q is a divalent hydrocarbon group having 1 to 15 carbon atoms which may contain an ether bond, for example, an alkylene group or an alkylene group which may contain an ether bond. 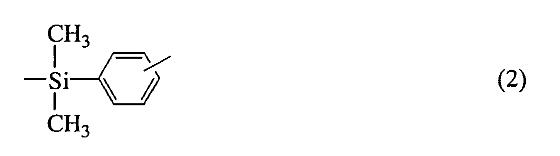 (inclusive of o-, m- and p-positions) 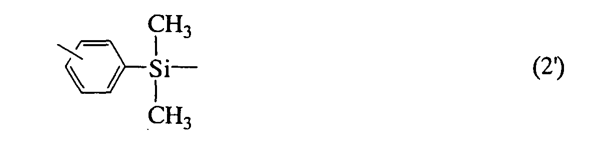 (inclusive of o-, m- and p-positions)

The linear fluoropolyether compound serving as component (A) of the curable composition is most preferably a compound of the general formula (1). 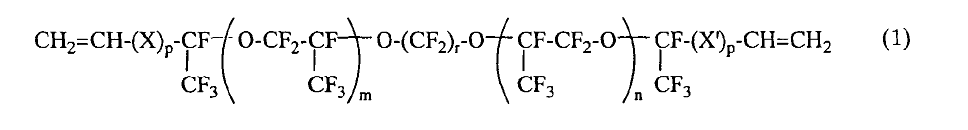 Herein, X is -CH₂-, -CH₂O-, -CH₂OCH₂- or -Y-NR-CO- wherein Y is -CH₂- or a group of the structural formula (2) and R is hydrogen, methyl, phenyl or allyl; X' is -CH₂-, -OCH₂-, - CH₂OCH₂- or -CO-NR'-Y'- wherein Y' is -CH₂- or a group of the structural formula (2') and R' is hydrogen, methyl, phenyl or allyl; p is independently 0 or 1, r is an integer of 2 to 6, and m and n each are an integer of 0 to 200. 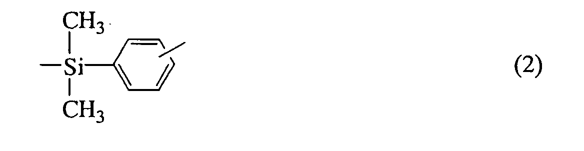 (inclusive of o-, m- and p-positions) 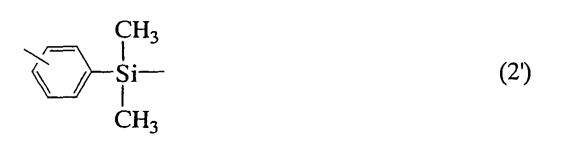 (inclusive of o-, m- and p-positions)

The linear fluoropolyether compound e.g. of formula (1) preferably has a weight-average molecular weight of 1,000 to 100,000, and most preferably 3,000 to 50,000.

Specific examples of the linear fluoropolyether compound of formula (1) include the following compounds. Note that m and n are as defined above.

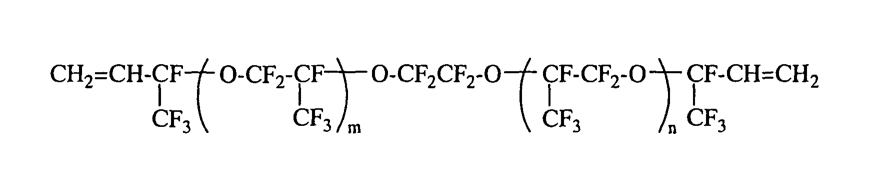

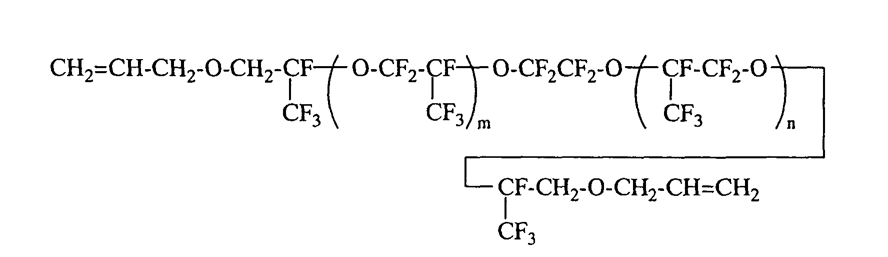

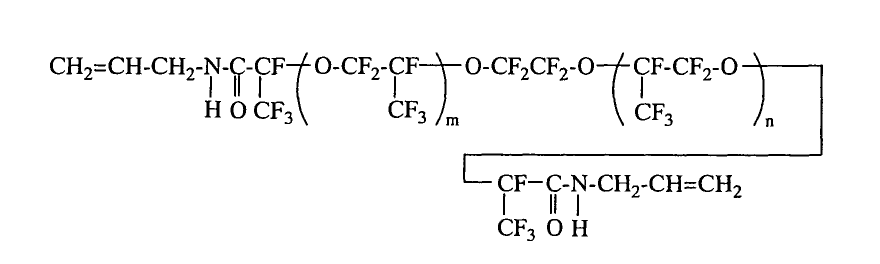

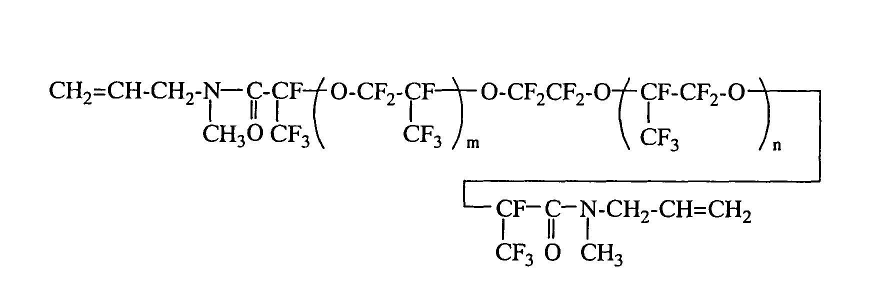

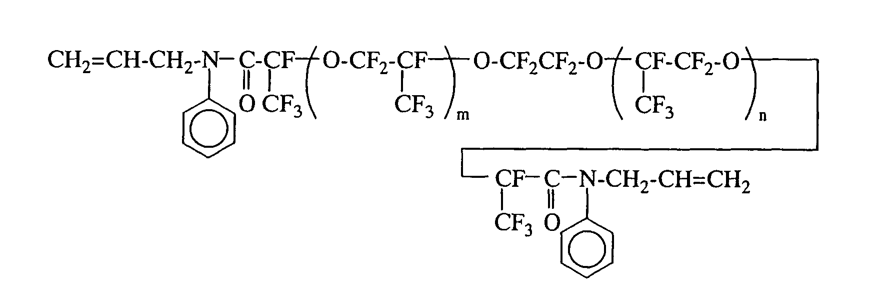

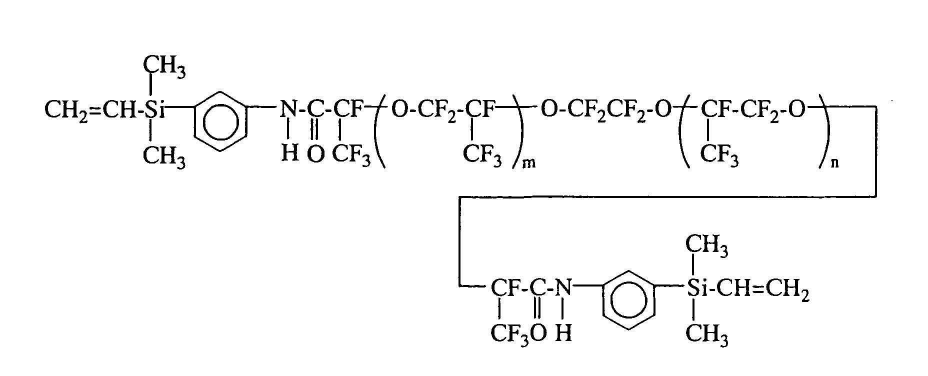

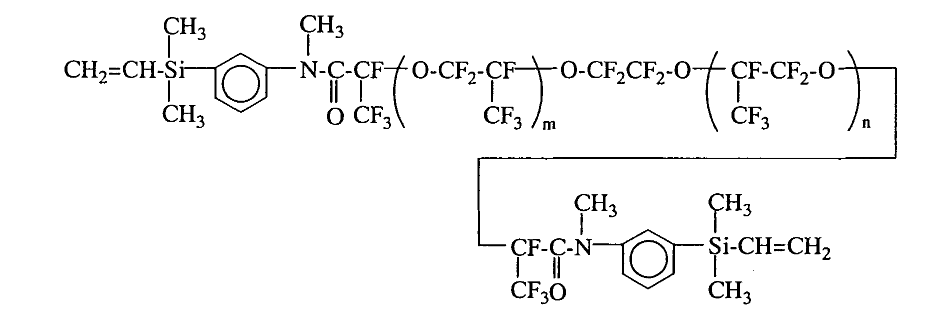

In the practice of the invention, to modify the linear fluoropolyether compound such as compound of formula (1) to the desired weight-average molecular weight in accordance with the intended use, the linear fluoropolyether compound may first be subjected to hydrosilylation with an organosilicon compound bearing two SiH groups in a molecule e.g. by an ordinary method and under ordinary conditions. The resulting chain-extended product can then be used as component (A).

Component (B) is an organosilicon compound having at least two, preferably at least three, silicon atom-bonded hydrogen atoms (i.e., SiH groups) in a molecule. The organosilicon compound (B) serves as a crosslinking agent and chain extender for component (A). When compatibility with and dispersion in component (A) and uniformity after curing are taken into account, the organosilicon compound should preferably have at least one monovalent perfluoroalkyl, monovalent perfluorooxyalkyl, divalent perfluoroalkylene or divalent perfluorooxyalkylene group in a molecule.

Preferred examples of such perfluoroalkyl, perfluorooxyalkyl, perfluoroalkylene and perfluorooxyalkylene groups include those of the following general formulas: monovalent perfluoroalkyl groups:

CₘF₂ₘ₊₁-

(m is an integer from 1 to 20, and preferably from 2 to 10.) divalent perfluoroalkylene groups:

-CₘF₂ₘ-

(m is an integer from 1 to 20, and preferably from 2 to 10.) monovalent perfluorooxyalkyl groups: 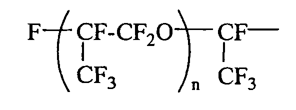 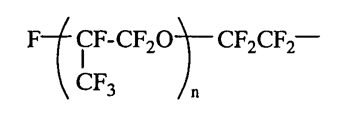 (n is an integer from 1 to 5.) divalent perfluorooxyalkylene groups: 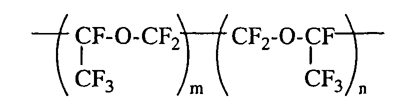 (m+n is an integer of 2 to 100.)

-(CF₂O)ₘ-(CF₂CF₂O)ₙ-CF₂-

(Each of m and n is an integer from 1 to 50.)

These perfluoro(oxy)alkyl and perfluoro(oxy)alkylene groups may be bonded to silicon atoms directly or via divalent linking groups. Suitable divalent linking groups include alkylene groups, arylene groups, combinations thereof, in which may intervene an ether-bonding oxygen atom, an amide bond, a carbonyl bond or the like, and preferably those of 2 to 12 carbon atoms. Examples of suitable divalent linking groups are:

-CH₂CH₂-,

-CH₂CH₂CH₂-,

-CH₂CH₂CH₂OCH₂-,

-CH₂CH₂CH₂-NH-CO-,

-CH₂CH₂CH₂-N(Ph)-CO-,

- CH₂CH₂CH₂-N(CH₃) -CO-, and

- CH₂CH₂CH₂-O-CO- .

Note that Ph is phenyl.

In addition to the monovalent organic groups containing mono- or divalent fluorinated substituent groups (i.e., perfluoroalkyl, perfluorooxyalkyl, perfluoroalkylene or perfluorooxyalkylene groups), the organosilicon compound may contain monovalent substituent groups bonded to silicon atoms, preferably substituted or unsubstituted monovalent hydrocarbon groups of 1 to 20 carbon atoms. Examples include alkyl groups such as methyl, ethyl, propyl, butyl, hexyl, cyclohexyl, octyl and decyl, alkenyl groups such as vinyl and allyl, aryl groups such as phenyl, tolyl and naphthyl, aralkyl groups such as benzyl and phenylethyl, or substituted forms of the foregoing in which some hydrogen atoms are substituted with chlorine atoms, cyano groups or the like, such as chloromethyl, chloropropyl and cyanoethyl.

The organosilicon compound (B) may be cyclic or chain-like or even three-dimensional network.

No particular limitation is imposed on the number of silicon atoms per molecule in the organosilicon compound, although it is generally about 2 to 60, and preferably about 3 to 30.

Illustrative examples of the organosilicon compound (B) include compounds of the following formulas, wherein Me stands for methyl and Ph stands for phenyl. These compounds may be used alone or in admixture.

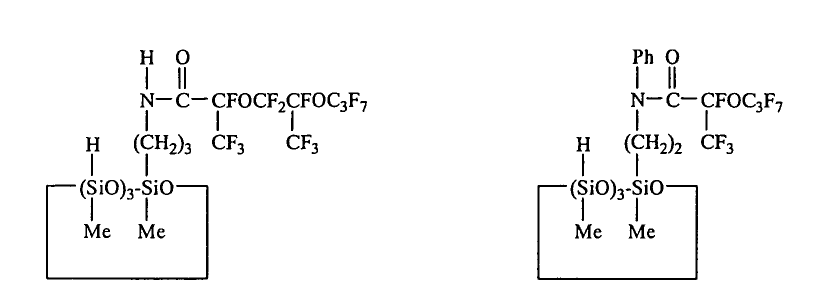

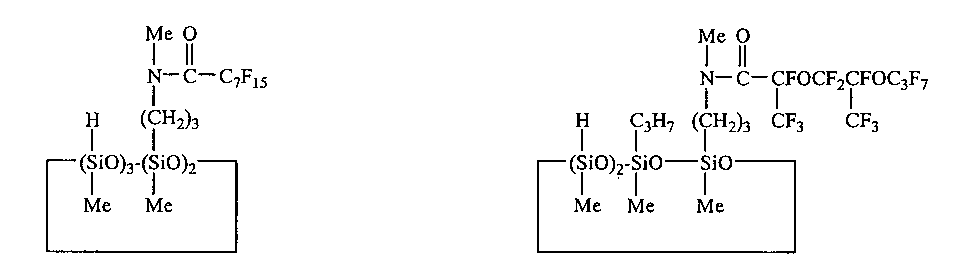

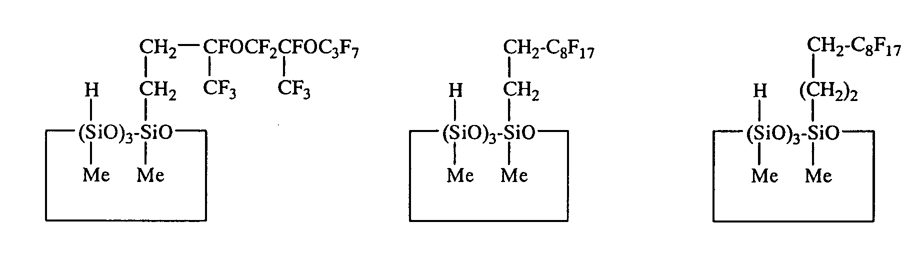

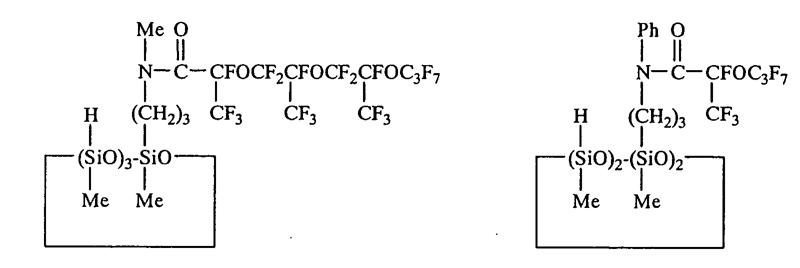

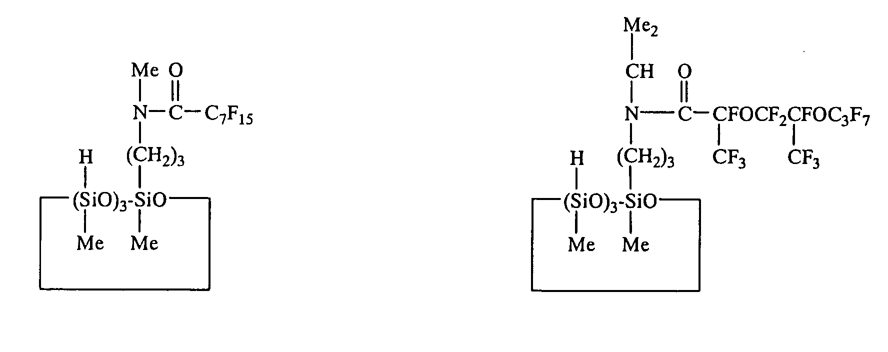

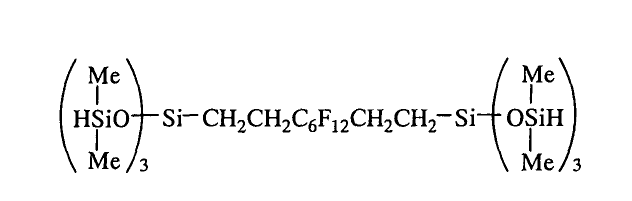

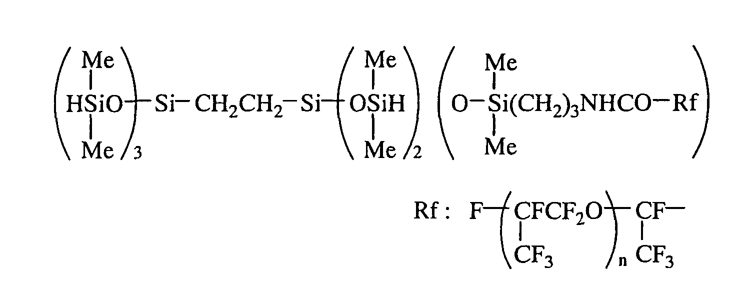

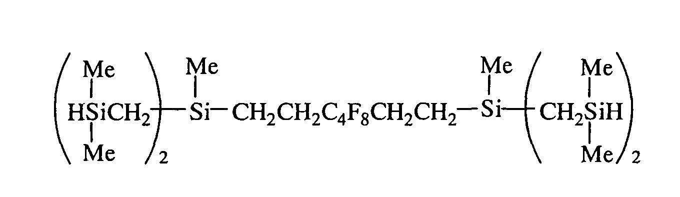

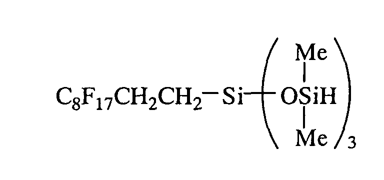

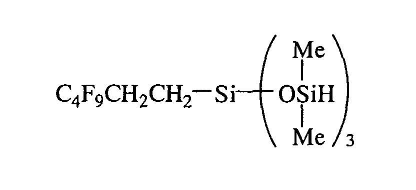

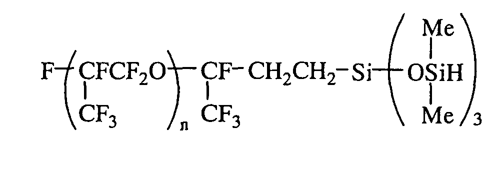

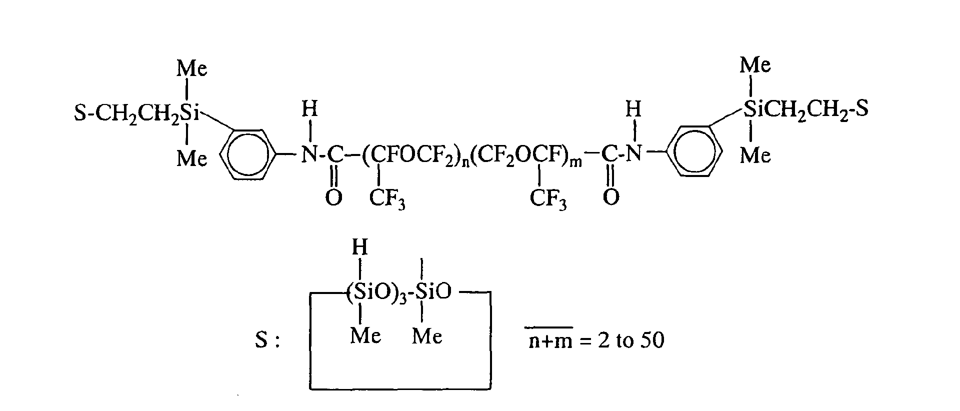

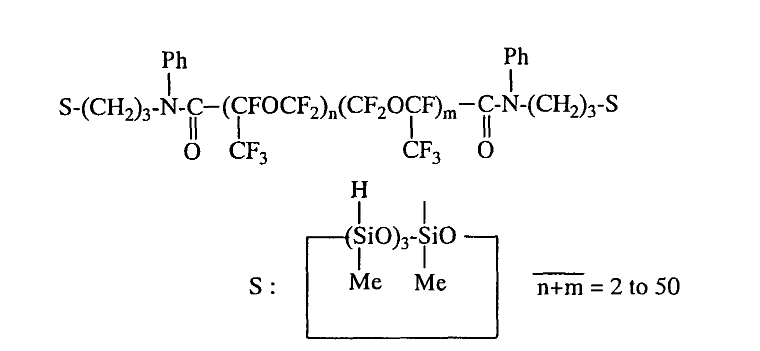

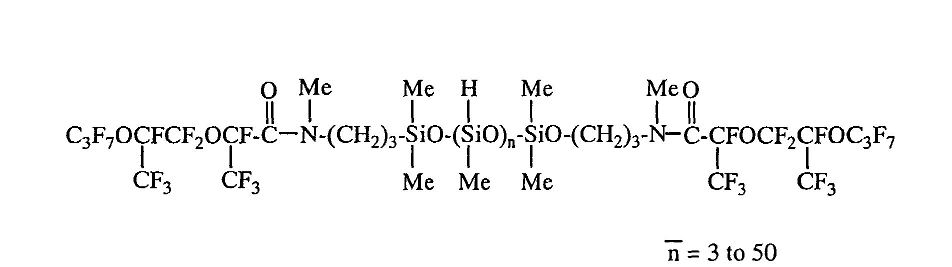

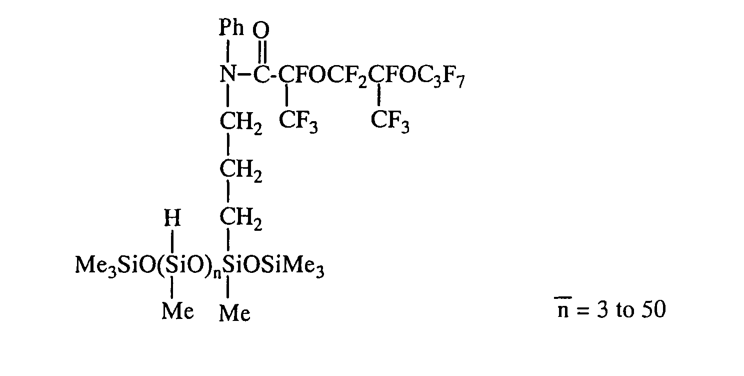

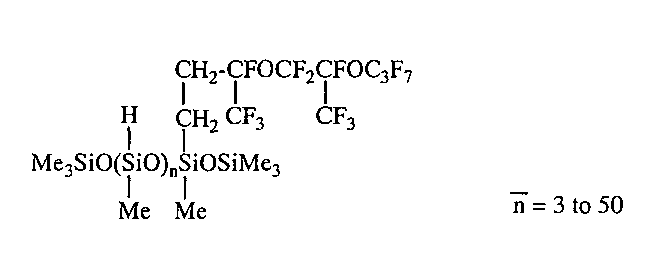

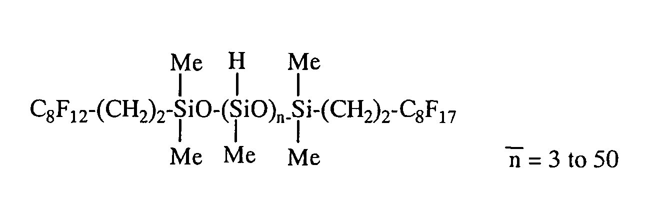

Component (B) is generally included in an amount which supplies preferably 0.2 to 5 moles, and more preferably 0.5 to 2 moles, of hydrosilyl (SiH) groups per mole of alkenyl groups (e.g., vinyl, allyl, cycloalkenyl) on component (A). Too little component (B) may lead to an inadequate degree of crosslinking, whereas too much may favor chain extension at the expense of curing, may result in foaming of the composition, or may be detrimental to the heat resistance, compressive set and other properties of rubber parts.

Component (C) is spherical silica serving as a thermal conductivity improver. It should have an average particle size of 0.05 to 2.0 µm, preferably 0.2 to 1.0 µm. Spherical silica having an average particle size of less than 0.05 µm cannot be added in a sufficient amount to enhance thermal conductivity whereas spherical silica having an average particle size in excess of 2.0 µm is difficult to increase the strength of the rubber material to which it is added. Spherical silica having a specific average particle size is commercially available, for example, as Admafine silica series from Admatechs Co., Ltd.

No particular limit is imposed on the amount of spherical silica (C) added. Preferably spherical silica is compounded in an amount of 20 to 300 parts by weight, especially 40 to 200 parts by weight per 100 parts by weight of component (A). Outside the range, too less amounts of spherical silica may fail to impart a desired thermal conductivity whereas too large amounts may reduce the strength of cured rubber.

Component (D) is a hydrosilylation catalyst which is generally selected from transition metals, for example, platinum group metals such as Pt, Rh and Pd and compounds of transition metals. Typical are noble metal compounds which are expensive. Platinum and platinum compounds are thus used because they are readily available.

Exemplary platinum compounds include chloroplatinic acid, complexes of chloroplatinic acid with olefins such as ethylene, complexes of chloroplatinic acid with alcohols and vinylsiloxanes, and metallic platinum supported on silica, alumina or carbon though not limited thereto. Known platinum group metal compounds other than the platinum compounds include rhodium, ruthenium, iridium, and palladium compounds, for example, RhCl(PPh₃)₃, RhCl(CO)(PPh₃)₂, RhCl(C₂H₄)₂, Ru₃(CO)₁₂, IrCl(CO)(PPh₃)₂, and Pd(PPh₃)₄ wherein Ph denotes phenyl.

The amount of the hydrosilylation catalyst used is not particularly limited because an ordinary catalytic amount achieves a desired curing rate. From the economical standpoint and for satisfactory cured properties, the catalyst is preferably added in an amount to give 0.1 to 1,000 ppm, more preferably 0.1 to 500 ppm of platinum group metal based on the total weight of the curable composition.

If necessary, various additives may be added to the curable composition of the invention to enhance its usefulness. Examples of such additives include polysiloxanes containing CH₂=CH(R²)SiO units (wherein R² is a hydrogen atom or a substituted or unsubstituted monovalent hydrocarbon group) (see JP-B 48-10947) and acetylene compounds (see U.S. Patent No. 3,445,420 and JP-B 4-3774) which are added to control the curing rate of the curable composition, and ionic compounds of heavy metals (see U.S. Patent No. 3,532,649).

The curable composition of the invention may also have added thereto a filler for the purposes of reducing heat shrinkage during curing, lowering the thermal expansion coefficient of the elastomer obtained by curing the composition, enhancing the thermal stability, weatherability, chemical resistance, flame retardance and mechanical strength of the elastomer, and decreasing the gas permeability of the elastomer. Examples of such fillers include fumed silica, quartz flour, glass fibers, carbon, metal oxides such as titanium oxide, and metal carbonates such as calcium carbonate and magnesium carbonate. If necessary, suitable pigments and dyes may also be added.

The method of preparing the curable fluoropolyether rubber composition of the invention is not critical. The composition may be formulated as a single composition by compounding all the essential components. Alternatively, the rubber composition is formulated as two packs e.g. one pack consisting of components (A), (C) and (D) and the other pack consisting of components (A), (B) and (C), where the two packs are mixed together on use.

The composition will cure at room temperature depending on the type of functional group on component (A) and the type of catalyst (D). Often and preferably, the composition is cured by heating at 100 to 200°C for several minutes to several hours.

Prior to use, the curable fluoropolyether rubber composition of the invention may be dissolved in a suitable fluorochemical solvent such as 1,3-bistrifluoromethylbenzene or perfluorooctane to a suitable concentration, depending on a particular application or purpose intended.

The curable compositions of the invention are molded and cured into rubber articles which are suitable for use in automobiles, chemical plants, ink jet printers, semiconductor manufacturing lines, analytical or scientific instruments, medical equipment, aircraft or fuel cells and specifically, as rubber parts such as diaphragms, valves, O-rings, oil seals, gaskets, packings, joints and face seals. They are also useful as tent film materials, sealants, molded parts, extruded parts, coatings, copier roll materials, electrical moisture-proof coatings, sensor potting materials, fuel cell seals, and laminate rubber fabrics.

Rubber articles made of the cured composition of the invention include, but are not limited to,
rubber parts for automobiles, for example, diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, and seals such as oil seals and cylinder head gaskets;
rubber parts for chemical plants, for example, pump diaphragms, valves, O-rings, packings, oil seals, and gaskets;
rubber parts for ink jet printers and semiconductor manufacturing lines, for example, diaphragms, valves, O-rings, packings, and gaskets;
rubber parts for analytical and scientific instruments and medical equipment, for example, pump diaphragms, O-rings, packings, valves, and joints; and
rubber parts for aircraft, for example, O-rings, face seals, packings, gaskets, diaphragms, and valves in fluid piping for engine oil, jet fuel, hydraulic oil and Skydrol®.

### EXAMPLE

Examples of the invention are given below by way of illustration and not by way of limitation. All parts are by weight.

### Example 1

To 100 parts of a polymer of formula (6) shown below (viscosity 5,500 cs, weight average molecular weight 15,320, vinyl content 0.012 mol/100 g) were added 15 parts of fumed silica treated with dimethylsiloxy groups and having a specific surface area of 200 m²/g and then 40 parts of spherical silica Admafine SO-25R (Admatechs Co., Ltd., average particle size 0.6 µm). They were mixed and heat treated and dispersed on a three-roll mill. To the mixture were added 2.40 parts of a fluorinated organosilicon compound of formula (7) shown below, 0.2 part of a toluene solution of a catalyst in the form of chloroplatinic acid modified with CH₂ = CHSiMe₂OSiMe₂CH = CH₂ wherein Me is methyl (platinum concentration 1.0 wt%), and 0.4 part of a 50% toluene solution of ethynyl cyclohexanol. They were mixed to form a composition I.

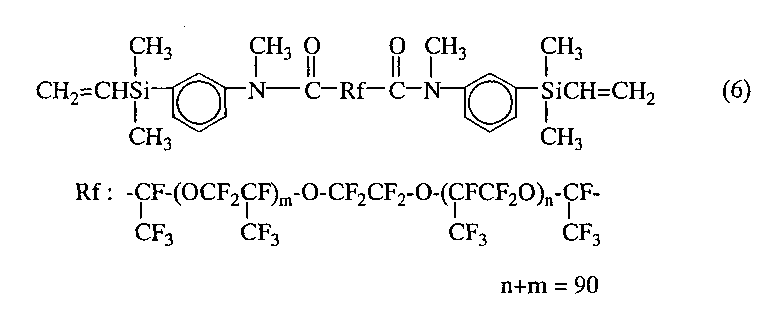

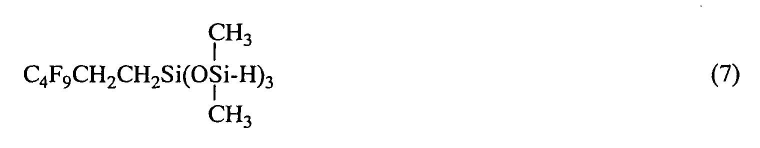

The composition was deaerated in vacuo, cast into a rectangular frame of 2 mm thick, deaerated again, and press cured at 100 kg/cm² and 150°C for 10 minutes. A test specimen was cut from the cured sample and measured for hardness, elongation and tensile strength according to JIS K6251 and K6253, with the results shown in Table 1. Also the thermal conductivity of composition I was measured, with the results shown in Table 2.

The specimen of composition I was also examined for heat resistance, with the results shown in Table 3. Additionally, chemical resistance, solvent swell, low-temperature property and moisture permeability were tested, with the results shown in Tables 4 to 7.

### Examples 2-4

Compositions II, III and IV were prepared as in Example 1 except that the amount of spherical silica Admafine SO-25R added was changed to 60, 80 and 100 parts. As in Example 1, rectangular sheets of 2 mm thick were prepared and their rubber physical properties were measured, with the results shown in Table 1. The thermal conductivity of compositions II, III and IV was measured, with the results shown in Table 2.

### Comparative Example 1

A composition V was prepared as in Example 1 except that the spherical silica Admafine SO-25R was omitted. As in Example 1, rectangular sheets of 2 mm thick were prepared and their rubber physical properties were measured, with the results shown in Table 1. The thermal conductivity of composition V was measured, with the result shown in Table 2.

Additionally, chemical resistance, solvent swell, low-temperature property and moisture permeability were tested on the specimen of composition V, with the results shown in Tables 4 to 7. The chemical resistance of composition I was substantially comparable to that of composition V.

**Table 1:**

| Physical properties | | | | | |
|---|---|---|---|---|---|
| | Example | | | | Comparative Example |
| | 1 | 2 | 3 | 4 | 1 |
| Composition | I | II | III | IV | V |
| Hardness (Durometer type A) | 55 | 59 | 66 | 73 | 42 |
| Elongation (%) | 200 | 170 | 140 | 110 | 360 |
| Tensile strength (MPa) | 7.0 | 6.5 | 6.4 | 6.1 | 9.0 |

**Table 2**

| | Example | | | | Comparative Example |
|---|---|---|---|---|---|
| | 1 | 2 | 3 | 4 | 1 |
| Composition | I | II | III | IV | V |
| Thermal conductivity^{*} (cal/cm·sec) | 0.56 × 10⁻³ | 0.75 × 10⁻³ | 0.92 × 1⁻³ | 1.1 × 10⁻³ | 0.32 × 10⁻³ |

| | | | | | |
|---|---|---|---|---|---|
| * measured by rapid thermal conductivity meter Kemtherm QTM-D3 by Kyoto Densi Kogyo Co., Ltd. | | | | | |

It is seen from Table 2 that thermal conductivity increases as the amount of spherical silica Admafine increases.

**Table 3**

| Example 1 (Composition I) | | Initial | 3 days | 7 days |
|---|---|---|---|---|
| Heat resistance @200°C | Hardness (Durometer type A) | 55 55 | 54 (-1) | 53 (-2) |
| | Elongation (%) | 200 | 190 (-10) | 190 (-10) |
| | Tensile strength (MPa) | 7.0 7.0 | 6.9 (-0.1) | 6.7 (-0.3) |
| | Heat loss (%) | - | 0.6 | 1.2 |

**Table 4:**

| Chemical resistance | | | | |
|---|---|---|---|---|
| Change of rubber hardness | Example 1 | | Comparative Example 1 | |
| | Composition I | | Composition V | |
| | Hardness | Surface state | Hardness | Surface state |
| Initial | 55 | - | 42 | - |
| conc. HC1 | 57 (+2) | unchanged | 43 (+1) | unchanged |
| conc. HF | 54 (-1) | unchanged | 41 (-1) | unchanged |
| cone. phosphoric acid | 55 (±0) | unchanged | 41 (-1) | unchanged |
| 40% KOH solution | 56 (+1) | unchanged | 43 (+1) | unchanged |
| Values in parentheses are increments/decrements of hardness points. Degrading conditions: 20°C, 3 days | | | | |

**Table 5:**

| Solvent swelling | | | |
|---|---|---|---|
| Volume change (%) | Composition I | Viton GFLT | FE61 |
| gasoline | + 8 | + 5 | + 42 |
| methanol | + 1 | + 16 | + 1 |
| chloroform | +10 | + 12 | + 23 |
| acetone | + 6 | +148 | +177 |
| toluene | + 7 | + 10 | + 30 |
| IPA | + 3 | + 1 | + 1 |
| acetonitrile | + 1 | + 46 | + 3 |
| MEK | +13 | +150 | +194 |
| ethyl acetate | +11 | +150 | +172 |
| THF | +15 | +149 | +204 |
| n-hexane | + 7 | + 2 | + 18 |
| carbon tetrachloride | + 9 | + 4 | + 27 |
| Viton GFLT is a fluororubber manufactured by E. I. DuPont de Nemours and Co. | | | |
| FE61 is a fluorosilicone rubber manufactured by Shin-Etsu Chemical Co., Ltd. | | | |

**Table 6:**

| Low-temperature property | | | |
|---|---|---|---|
| Gehman torsion test | Composition I | Viton E-60C | KE951 |
| T2 | -36° C | - 6°C | -41°C |
| T5 | -47°C | -11°C | -43° C |
| T10 | -53° C | -14° C | -44° C |
| T100 | -61°C | -20°C | -50°C |
| Viton E-60C is a fluororubber manufactured by E.I. DuPont de Nemours and Co. | | | |
| KE951 is a silicone rubber manufactured by Shin-Etsu Chemical Co., Ltd. | | | |
| | | | |

**Table 7**

| | Moisture permeability (g/m²·24hr) |
|---|---|
| Composition I | 4 |
| KE951 | 100 |
| Viton GFLT | 4 |
| FE251 | 50 |
| Moisture permeability was measured by CUP method under conditions B: 40° C and 90% RH. | |
| KE951 is a silicone rubber manufactured by Shin-Etsu Chemical Co., Ltd. | |
| Viton GFLT is a fluororubber manufactured by E.I. DuPont de Nemours and Co. | |
| FE251 is a fluorosilicone rubber manufactured by Shin-Etsu Chemical Co., Ltd. | |

### Example 5

A composition VI was prepared as in Example 1 except that spherical silica Admafine SO-C1 having an average particle size of 0.2-0.3µm was used instead. As in Example 1, a rectangular sheet of 2 mm thick was prepared and its rubber physical properties and thermal conductivity were measured, with the results shown below.

| | |
|---|---|
| Hardness (Durometer type A): | 53 |
| Elongation (%): | 220 |
| Tensile strength (MPa): | 7.4 |
| Thermal conductivity (cal/cm·sec): | 0.55 × 10⁻³ |

### Example 6

A composition VII was prepared as in Example 1 except that spherical silica Admafine SO-C5 having an average particle size of 2.0 µm was used instead. As in Example 1, a rectangular sheet of 2 mm thick was prepared and its rubber physical properties and thermal conductivity were measured, with the results shown below.

| | |
|---|---|
| Hardness (Durometer type A): | 48 |
| Elongation (%): | 180 |
| Tensile strength (MPa): | 6.5 |
| Thermal conductivity (cal/cm·sec): | 0.59 × 10⁻³ |

There have been described curable fluoropolyether rubber compositions which cure into rubber parts that exhibit good solvent resistance, chemical resistance, weather resistance, mold release, water repellency and oil repellency and are improved in heat conduction.

## Claims

1. A curable fluoropolyether rubber composition comprising
(A) linear fluoropolyether compound having at least two alkenyl groups in a molecule and perfluoropolyether structure in the backbone,
(B) organosilicon compound having at least two silicon atom-bonded hydrogen atoms in a molecule,
(C) spherical silica having an average particle size of 0.05 to 2.0 µm, and
(D) hydrosilylation catalyst.

2. The composition of claim 1 wherein component (A) comprises linear fluoropolyether compound of the following general formula (1): 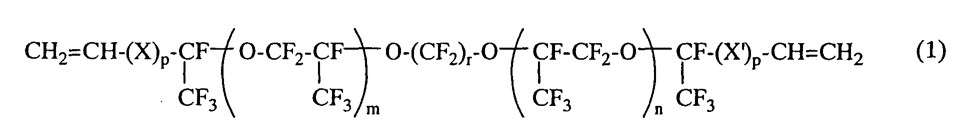 wherein X is -CH₂-, -CH₂O-, -CH₂OCH₂- or -Y-NR-CO- wherein Y is -CH₂- or a group of the following structural formula (2): 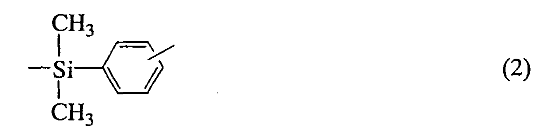 and R is hydrogen, methyl, phenyl or allyl,
X' is -CH_{z}- , -OCH₂-, -CH₂OCH₂- or -CO-NR'-Y'- wherein Y' is -CH₂- or a group of the following structural formula (2'): 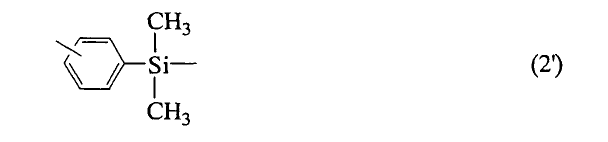 and R' is hydrogen, methyl, phenyl or allyl,
p is independently 0 or 1, r is an integer of 2 to 6, and m and n each are an integer of 0 to 200.

3. Composition of claim 1 or 2 wherein the organosilicon compound (B) further contains at least one monovalent perfluoroalkyl, monovalent perfluorooxyalkyl, divalent perfluoroalkylene or divalent perfluorooxyalkylene group.

4. A rubber article comprising the curable fluoropolyether rubber composition of claim 1, 2 or 3 in the cured state.

5. The rubber article of claim 4 for use in automobiles, chemical plants, ink jet printers, semiconductor manufacturing lines, analytical or scientific instruments, medical equipment, aircraft or fuel cells.

6. The rubber article of claim 4 or 5 which is a diaphragm, valve, O-ring, oil seal, gasket, packing, joint or face seal.

7. In an addition-curable fluoropolyether rubber composition, the use of spherical silica having an average particle size of from 0.05 to 2.0 µm to increase the thermal conductivity of the corresponding cured rubber.
